# EUROPÄISCHE PATENTANMELDUNG

(11) **EP 1 876 551 A1**
(43) Veröffentlichungstag der Anmeldung: **09.01.2008**
(21) Anmeldenummer: 06013749.4
(22) Anmeldetag: 03.07.2006
(51) Int. Cl.: G06K 7/00

(54) **Verfahren zum Betreiben eines RFID-Systems und Lesegerät für ein RFID-System**

(71) Anmelder: SIEMENS AKTIENGESELLSCHAFT, 80333 München (DE)
(72) Erfinder: Bozenhardt, Johannes, 76275 Ettlingen (DE); Lahner, Frank, 92224 Amberg (DE)

(57) **Zusammenfassung**

Ein Verfahren zum Betreiben eines RFID-Systems (1), in dem ein Lesegerät (2) mittels eines Generators (7) wenigstens einen Transponder (3) drahtlos mit elektromagnetischer Energie versorgt und in dem der Transponder (3) Daten an das Lesegerät (2) überträgt, insbesondere durch Modulation seiner Lasteigenschaften, zeichnet sich dadurch aus, dass zum Erkennen von Manipulationen ein durch den Generator (7) zur Erregung des Transponders (3) erzeugtes Generatorsignal (GS) und ein durch eine Lesespule (L) des Lesegeräts (2) empfangenes Lesespulensignal (MS) durch ein Vergleichsmittel (10) verglichen werden und dass bei einem Vorhandensein von Differenzanteilen wenigstens einer vorgegebenen Stärke zwischen Generatorsignal (GS) und Lesespulensignal (MS) ein Anzeigesignal (AS) zum Anzeigen einer Manipulation ausgegeben wird.

## Beschreibung

Die vorliegende Erfindung betrifft ein Verfahren zum Betreiben eines RFID-Systems nach dem Oberbegriff des Patentanspruchs 1, in dem ein Lesegerät mittels eines Generators wenigstens einen Transponder (Tag) drahtlos mit elektromagnetischer Energie versorgt und in dem der Transponder Daten an das Lesegerät überträgt, insbesondere durch Modulation seiner Lasteigenschaften. Die Laständerung des Tags ruft durch Rückwirkung auf das Erregerfeld eine Belastungs-änderung des Generators hervor, die als Auswertekriterium zum Lesen der Nutzinformation dient.

Weiterhin betrifft die vorliegende Erfindung ein Lesegerät nach dem Oberbegriff des Patentanspruchs 8 für ein RFID-System, aufweisend einen Erreger- beziehungsweise Schwingkreis mit einer Sende-/Lesespule zum Senden und Empfangen elektromagnetischer Signale und einen mit dem Erreger beziehungsweise Schwingkreis gekoppelten Generator zum Erregen des Erreger- beziehungsweise Schwingkreises mit einem Generatorsignal.

Schließlich betrifft die vorliegende Erfindung ein RFID-System nach dem Oberbegriff des Patentanspruchs 15 mit wenigstens einem Lesegerät und einer Anzahl von Transpondern, die durch das Lesegerät mit elektromagnetischer Energie versorgt und zur Übertragung von Daten an das Lesegerät, insbesondere durch Lastmodulation, ausgebildet sind.

Systeme zur funkgestützten Identifizierung, kurz: RFID-Systeme (RFID - Radio Frequency Identification), gewinnen derzeit auch für den Masseneinsatz signifikant an Bedeutung. Mögliche Beispiele für den Einsatz derartiger Systeme sind Wegfahrsperren und Schließanlagen für Kraftfahrzeuge, auto-matische Futtersysteme in der Tierhaltung, maschinenlesbare Reisepässe oder dergleichen. Derartige Systeme sind jedoch relativ kostenintensiv und damit nicht für einen Massenmarkt geeignet. Weitere, weniger kostenintensive Anwendungen liegen im Bereich automatischer Supermarktkassen, an denen Waren über Transponder identifiziert und abgerechnet werden, oder Zugangskontrollen mit Eintrittskarten, bei denen Transponder mit begrenzter Lebensdauer (Einmalnutzung) zum Einsatz kommen.

Insbesondere im Rahmen der letztgenannten Anwendungsbeispiele kommen regelmäßig passive Transponder zum Einsatz, die durch ein vom Lesegerät ausgesandtes elektromagnetisches Feld mit Energie versorgt werden. Die so entstehende elektromagnetische Kopplung von Lesegerät und Transponder wird andererseits auch zur Informationsübertragung vom Transponder zum Lesegerät verwendet. Hierzu nimmt der Transponder eine gezielte Veränderung seiner physikalisch-elektrischen Eigenschaften vor, was sich in dem vorstehend beschriebenen Kopplungsfeld zwischen Lesegerät und Transponder als eine entsprechende Signatur bemerkbar macht, die durch das Lesegerät erkannt, demoduliert und ausgewertet wird.

Da zu erwarten ist, dass sich die RFID-Technik in den nächsten Jahren auf breiter Front am Markt durchsetzen wird, beispielsweise bei Fahrkarten, Eintrittskarten, Preisschildern, Warenwirtschaftssystemen oder dergleichen, ist synchron mit einer derartigen Marktdurchdringung auch mit einem gehäuften Auftreten versuchter Manipulationen derartiger Systeme zu rechnen. Gelingt es nämlich, die vorstehend umrissene Kommunikation zwischen Transponder und Lesegerät zu manipulieren, ist eine unbefugte Beschaffung von Waren, Dienstleistungen oder Informationen leicht möglich.

Da es aufgrund der starken Abnahme von Feldstärke beziehungsweise Kopplung zwischen Lesegerät und Transponder mit dem relativen Abstand praktisch kaum möglich ist, die Kommunikation zwischen einem Lesegerät und einem gegebenen Transponder mittels eines zweiten Transponders oder RFID-Tags zu stören, ist davon auszugehen, dass ein potentieller Angreifer gezwungen ist, aktiv durch Energiezufuhr in den Lesevorgang zwischen Lesegerät und Transponder einzugreifen. Mit anderen Worten: im Rahmen der vorliegenden Beschreibung wird davon ausgegangen, dass ein Störer einen aktiven Sender verwendet, der durch Erzeugen einer hohen Feldstärke auch bei größerem Abstand vom Lesegerät in der Lage ist, die Kopplung zwischen einem Transponder und einem Lesegerät zu dominieren, um somit die Anwesenheit eines Transponders dem Lesegerät gegenüber zu verbergen. Weiterhin kann der Angreifer durch die Modulation einer Sendeleistung des Störsenders dem Lesegerät eine gefälschte Leseinformation vortäuschen.

Der Erfindung liegt die Aufgabe zugrunde, ein Verfahren zum Betreiben eines RFID-Systems und ein zur Durchführung dieses Verfahrens geeignetes Lesegerät anzugeben, durch das Manipulationen der vorstehend beschriebenen Art sicher erkannt werden können.

Erfindungsgemäß wird die Aufgabe bei einem Verfahren der eingangs genannten Art durch die kennzeichnenden Merkmale des Patentanspruchs 1 gelöst. Demgemäß ist ein Verfahren zum Betreiben eines RFID-Systems, in dem ein Lesegerät mittels eines Generators wenigstens einen Transponder drahtlos mit elektromagnetischer Energie versorgt und in dem der Transponder Daten an das Lesegerät überträgt, insbesondere durch Modulation seiner Lasteigenschaften, dadurch gekennzeichnet, dass zum Erkennen von Manipulationen ein durch den Generator zur Erregung des Transponders erzeugtes Generatorsignal und ein durch eine Lesespule des Lesegeräts empfangenes Lesespulensignal durch ein Vergleichsmittel verglichen werden. Hierbei ist es zweckmäßig, dass bei einem Vorhandensein von Differenzanteilen wenigstens einer vorgegebenen Stärke zwischen Generatorsignal und Lesespulensignal ein Anzeigesignal zum Anzeigen einer Manipulation ausgegeben wird. Ein Maß für den Differenzanteil ist die unterschiedliche Signalcharakteristik zwischen dem Generatorsignal und dem Lesespulenempfangssignal.

Vorrichtungstechnisch wird die Aufgabe bei einem Lesegerät der eingangs genannten Art durch die kennzeichnenden Merkmale des Patentanspruchs 8 gelöst. Demgemäß ist ein Lesegerät für ein RFID-System, aufweisend einen Schwingkreis mit einer Sende-/Lesespule zum Senden und Empfangen elektromagnetischer Signale und einen mit dem Schwingkreis gekoppelten Generator zum Erregen des Schwingkreises mit einem Generatorsignal, gekennzeichnet durch ein mit der Lesespule und mit dem Generator gekoppeltes Vergleichsmittel, das zum Vergleichen des Generatorsignals und eines durch die Lesespule empfangenen Lesespulensignals ausgebildet ist. In vorteilhafter Weise sind Mittel vorhanden zum Ausgeben eines Anzeigesignals zum Anzeigen einer Manipulation, wenn zwischen Generatorsignal und Lesespulensignal Differenzanteile wenigstens einer vorgegebenen Stärke vorhanden sind.

Bei einem RFID-System der eingangs genannten Art wird die Aufgabe durch das kennzeichnende Merkmal des Patentanspruchs 15 gelöst. Demgemäß ist ein RFID-System mit wenigstens einem Lesegerät und einer Anzahl von Transpondern, die durch das Lesegerät mit elektromagnetischer Energie versorgt und zur Übertragung von Daten an das Lesegerät ausgebildet sind, insbesondere durch Lastmodulation, dadurch gekennzeichnet, dass das wenigstens eine Lesegerät als ein erfindungsgemäßes Lesegerät ausgebildet ist.

Erfindungsgemäß wird also das Vorhandensein einer fremden Energiequelle, die sich dem elektromagnetischen Feld des Lesegeräts überlagert, anhand von Differenzanteilen zwischen einem Generatorsignal des Lesegeräts und einem durch das Lesegerät empfangenen Lesespulensignal erkannt und als Indiz für einen möglichen Manipulationsversuch gewertet. Ohne fremde Signalquelle erkennt das Vergleichsmittel keine Differenzanteile, da Generatorsignal und Lesespulensignal gleich sind. Da das Lesespulensignal im Manipulationsfall sowohl durch den Generator erzeugte Eigenanteile als auch durch den Angreifer eingespeiste Fremdanteile enthält, wird es nachfolgend alternativ auch als Mischsignal bezeichnet.

Vorteilhafte Weiterbildungen der Erfindung sind Gegenstand von Unteransprüchen. So ist in Weiterbildung des erfindungsgemäßen Verfahrens zum Erreichen einer Unterscheidbarkeit zwischen dem Generator und einer fremden Energiequelle vorgesehen, die Quellen unterscheidbar zu machen, indem der Eigenanteil der Feldenergie des Lesegeräts über eine geeignete Modulation mit einer Signatur versehen wird. Hierzu kann im Zuge einer Ausgestaltung des erfindungsgemäßen Verfahrens vorgesehen sein, dass das Lesegerät eine Frequenz des Generatorsignals umtastet, wobei die Umtastung insbesondere wiederholt erfolgen kann.

Eine entsprechende Weiterbildung des erfindungsgemäßen Lesegeräts sieht vor, dass dieses ein Umtastmittel zum Umtasten einer Frequenz des Generatorsignals aufweist.

Alternativ und/oder zusätzlich kann im Zuge einer weiteren Ausgestaltung des erfindungsgemäßen Verfahrens auch eine Phasenlage des Generatorsignals (wiederholt) umgetastet werden. Entsprechend zeichnet sich das erfindungsgemäße Lesegerät in Weiterbildung durch ein Umtastmittel zum Umtasten einer Phase des Generatorsignals aus.

Um zu vermeiden, dass ein Angreifer die Umtastung des Generatorsignals detektiert und seinen Störsender entsprechend auf die neuen Eigenschaften des Generatorsignals nachregelt, ist in Weiterbildung des erfindungsgemäßen Verfahrens vorgesehen, dass das Umtasten der Frequenz und/oder der Phasenlage nach einem vorgegebenen Muster erfolgt. Mit anderen Worten: es erfolgt eine variable zeitliche Abfolge von Änderungen unterschiedlichen Betrages des Phasenwinkels oder der Frequenz des Generators.

Um das angesprochene Nachregeln des Steuersenders weiter zu erschweren, kann es sich bei dem vorgegebenen Muster im Zuge einer weiteren Ausgestaltung des erfindungsgemäßen Verfahrens um einen Pseudozufallscode handeln.

Auf diese Weise ist es dem Angreifer aus technischen Gründen zumindest kurzzeitig nach erfolgter Umtastung des Generatorsignals nicht möglich, vorhandene Differenzanteile zwischen dem Lesespulensignal/Mischsignal und dem Generatorsignal zu eliminieren, sodass der Manipulationsversuch erkennbar bleibt. Daher sieht eine Weiterbildung des erfindungsgemäßen Verfahrens vor, dass es sich bei dem vorgegebenen Muster um einen Pseudozufallscode handelt. Insbesondere wird dabei die Auswertezeit so gewählt, dass sie kürzer als eine zum Eliminieren der Differenzanteile (z. B. durch geeignete Regelung) erforderliche Zeit ist.

Entsprechende Weiterbildungen des erfindungsgemäßen Lesegeräts sehen vor, dass das Umtastmittel zum wiederholten Umtasten des Generatorsignals ausgebildet ist, wobei das Umtastmittel insbesondere zum Umtasten des Generatorsignals nach einem vorgegebenen Muster ausgebildet sein kann. Vorteilhafterweise handelt es sich bei dem vorgegebenen Muster in Weiterbildung des erfindungsgemäßen Lesegeräts um ein Pseudozufallsmuster.

Weitere Vorteile und Eigenschaften der vorliegenden Erfindung ergeben sich aus der nachfolgenden Beschreibung von Ausführungsbeispielen anhand der Zeichnung. Es zeigt:
- Fig. 1: ein schematisches Blockdiagramm eines erfindungs-gemäßen RFID-Systems und

- Fig. 2: ein detaillierteres Schaltschema eines Lesegeräts in dem RFID-System gemäß Fig. 1.

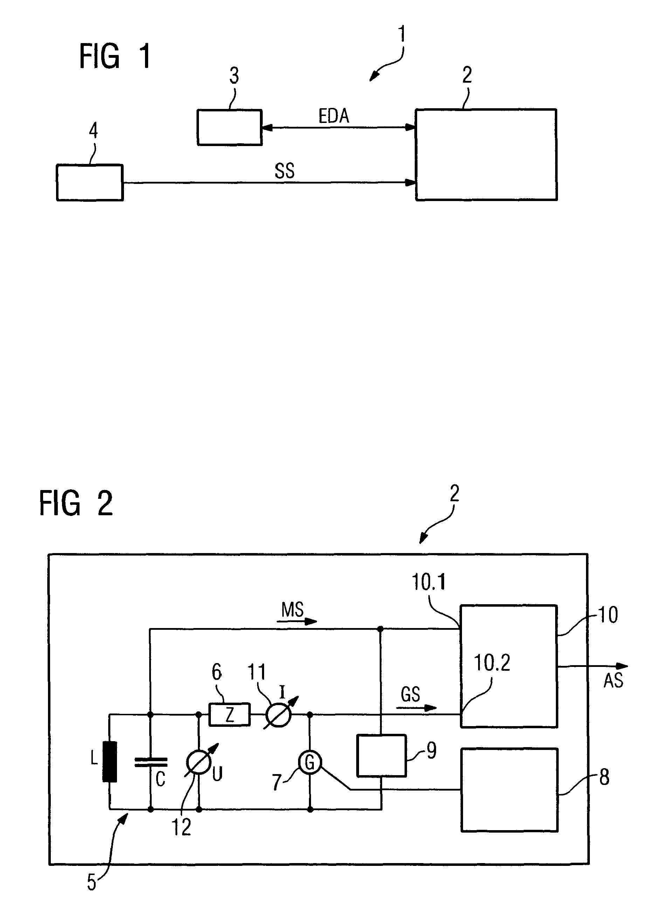

Fig. 1 zeigt schematisch ein RFID-System 1 mit einem Lesegerät 2 und wenigstens einem Transponder oder Tag 3. Weiterhin ist in Fig. 1 ein Störsender 4 dargestellt, der jedoch als solcher nicht Teil des RFID-Systems 1 ist.

Das Lesegerät 2 und der Transponder 3 stehen, wie in Fig. 1 mittels eines Doppelpfeils EDA dargestellt ist, zwecks Energieversorgung des Transponders 3 und zum Datenaustausch über elektromagnetische Felder in Wirkverbindung. Generell wird der Transponder 3 über von dem Lesegerät 2 ausgesandte elektromagnetische Felder mit Energie versorgt und erreicht über eine gezielte Änderung wenigstens einer Eigenschaft dieser Felder, insbesondere durch Lastmodulation, eine Übertragung von Nutzdaten, beispielsweise einer Identifikationsnummer, zurück zum Lesegerät 2. Das Lesegerät detektiert eine Signatur dieser Modulation und gewinnt daraus die übertragenen Nutzdaten.

Bei dem Störsender 4 handelt es sich um einen aktiven Manipulator, der versucht, mittels eines ausgesendeten Störsignals SS am Lesegerät 2 eine ausreichend hohe Feldstärke zu erzeugen, um die vorstehend beschriebene Wirkung des Transponders 3 zu dominieren, sodass dessen Modulationssignatur durch das Lesegerät 2 nicht mehr erkannt wird. Da es sich bei dem Störsender 4 um eine aktive Einheit handelt (im Gegensatz zu dem passiven Transponder 3), ist diese durch Erzeugen einer hohen Feldstärke generell in der Lage, die Kopplung zwischen Transponder 3 und Lesegerät 2 trotz eines möglicherweise größeren Abstands zwischen Störsender 4 und Lesegerät 2 zu dominieren. Auf diese Weise kann ein den Störsender 4 betreibender Angreifer die Anwesenheit des Transponders 3 gegenüber dem Lesegerät 2 verbergen. Darüber hinaus ist es bei geeigneter Modulation einer Leistung des Störsenders 4 auch möglich, dem Lesegerät 2 eine gefälschte Leseinformation (manipulierte Nutzdaten) vorzutäuschen.

Fig. 2 zeigt ein detaillierteres Schaltschema des Lesegeräts 2 in dem RFID-System 1 der Fig. 1. Das Lesegerät 2 besitzt einen aus einer Induktivität L und einer Kapazität C gebildeten Schwingkreis 5. Dieser ist über ein Entkopplungsglied 6 mit einem Generator 7 verbunden, der eine elektrische Wechselspannung erzeugt. Der Generator 7 steht in Wirkverbindung mit einem Umtastmittel 8. Parallel zu dem Entkopplungsglied 6 und dem Generator 7 ist eine Datenauswerteeinheit 9 geschaltet. Darüber hinaus besitzt das Lesegerät 2 ein Vergleichsmittel 10, dessen erster Eingang 10.1 mit der Induktivität L des Schwingkreises 5 und dessen zweiter Eingang 10.2 mit dem Generator 7 verbunden ist.

Des Weiteren besitzt das Lesegerät 2 gemäß Fig. 2 noch einen Strommesser 11 zur Bestimmung eines Laststroms I sowie einen Spannungsmesser 12 zur Bestimmung einer Resonanzspannung U am Schwingkreis 5.

Der Generator 7 erzeugt eine elektrische Wechselspannung, die über das Entkopplungsglied 6 dem Schwingkreis 5 zugeführt wird. Generator- und Schwingkreisfrequenz sind zumindest in Nähe der Resonanz. Die Güte des Schwingkreises ist so bemessen, dass die Frequenz des Generators trotz beispielsweise durch metallische Gegenstände hervorgerufener Änderungen der Resonanzfrequenz des Schwingkreises innerhalb der Bandbreite bleibt. Das Entkopplungsglied 6 ist erforderlich, um die Rückwirkung des Generators 7 auf den Schwingkreis 5 zu beeinflussen beziehungsweise zu minimieren. Mittels des Strommessers 11 und/oder des Spannungsmessers 12 lassen sich durch den Transponder 3 (Fig. 1) hervorgerufene Änderungen, wie eine Änderung des Laststromes I beziehungsweise der Resonanzspannung U am Schwingkreis 5, bestimmen. Dementsprechend kann durch die Auswerteeinheit 9 eine Signatur des Transponders 3 (Fig. 1) erkannt und eine entsprechende Nutzinformation gewonnen werden.

Es sei bemerkt, dass bei einer praktischen Ausführung des Lesegeräts 2 gemäß Fig. 2 der Strommesser 11 und der Spannungsmesser 12 nicht als von der Auswerteeinheit 9 getrennte bauliche Einheiten existieren müssen. Vorliegend kann dabei insbesondere der Spannungsmesser 12 auch in die Auswerteeinheit 9 integriert sein, sodass diese aus Veränderungen der Resonanzspannungen am Schwingkreis 5 auf die Signatur des Transponders 3 (Fig. 1) schließt, wie vorstehend erläutert.

Wenn nun ein Angreifer mittels des in Fig. 1 gezeigten Störsenders 4 dem RFID-System 1 Fremdenergie zuführt, ist es erfindungsgemäß möglich, das Vorhandensein der Energiequelle, die sich dem elektromagnetischen Feld des Lesegeräts überlagert, und damit einen potentiellen Manipulationsversuch zu erkennen. Hierzu wird dem ersten Eingang 10.1 des im Zuge des vorliegenden Beispiels als Diskriminator ausgebildeten Vergleichsmittels 10 ein Mischsignal MS zugeführt, welches die Summe von Signalanteilen der Fremdquelle (Störsender 4; Fig. 1) und des Generators 7 darstellt. Gleichzeitig wird dem zweiten Eingang 10.2 des Vergleichsmittels 10 ein unmittelbar von dem Generator 7 erzeugtes Generatorsignal GS zugeführt. Das Vergleichsmittel 10 vergleicht die an den Eingängen 10.1, 10.2 anliegenden Signale im Hinblick darauf, ob sie sich in ihrer Frequenz und/oder Phasenlage unterscheiden. Bei entsprechenden Unterschieden entstehen Differenz- oder Mischprodukte wie beispielsweise Schwebung. Wenn also Differenzanteile wenigstens einer vorgegebenen Stärke zwischen Generatorsignal GS und dem von der Induktivität L gelieferten Mischsignal MS oder Lesespulensignal vorhanden sind, erzeugt das Vergleichsmittel 10 ein Anzeigesignal AS, das zum Anzeigen einer möglichen Manipulation ausgegeben wird oder anderweitig als Steuersignal zum Auslösen einer Reaktion auf den Manipulationsversuch verwendet werden kann.

Allerdings besteht die Möglichkeit, dass ein Angreifer versucht, seinen Störsender 4 (Fig. 1) mit dem Generatorsignal GS zu synchronisieren, wobei z. B. eine Phasenregelschaltung (Phase Locked Loop - PLL) eingesetzt werden kann. Um auch in diesem Fall einen Manipulationsversuch des RFID-Systems sicher erkennen zu können, bewirkt das Umtastmittel 8 eine Umtastung der Frequenz und/oder Phasenlage des Generators 7 bzw. des Generatorsignals GS, wobei die Frequenzumtastung innerhalb solcher Grenzen um die Resonanzfrequenz des Schwingkreises 5 erfolgt, sodass die Kommunikation zwischen Lesegerät 2 und Transponder 3 (Fig. 1) ihrem Prinzip nach nicht beeinträchtigt ist.

Nach erfolgter Umtastung des Generatorsignals GS benötigt der Angreifer beziehungsweise der Störsender 4 (Fig. 1) aus technischen Gründen eine endliche Zeit zur Nachregelung des Störsignals, beispielsweise aufgrund eines Einschwingvorgangs der PLL, bevor das Störsignal SS (Fig. 1) mit dem Generatorsignal GS synchronisiert ist. Während dieser Zeit sind in dem Mischsignal MS die genannten Differenzanteile gegenüber dem Generatorsignal vorhanden, welche durch das Vergleichsmittel 10 erkannt werden, wie vorstehend beschrieben.

Insbesondere ist es in diesem Zusammenhang möglich, für den Vergleich in dem Vergleichsmittel 10 eine bestimmte maximale Vergleichs- oder Auswertezeit vorzugeben, innerhalb derer nach erfolgtem Umtasten der Vergleich von Generatorsignal GS und Mischsignal MS erfolgen sollte, um ein Nachregeln des Störsenders 4 (Fig. 1) auszuschließen.

Um weiterhin zu verhindern, dass ein Angreifer seinen Störsender zeitparallel zum Generator 7 des Lesegeräts 2 umtastet und damit wiederum die Differenzanteile aus dem Mischsignal MS eliminiert, ist gemäß dem Ausführungsbeispiel der Fig. 2 weiterhin vorgesehen, dass die Umtastung des Generators 7 beziehungsweise des Generatorsignals GS durch das Umtastmittel 8 im Rahmen einer (Pseudo-)Zufallsfolge erfolgt. Mit anderen Worten: das Umtastmittel 8 bewirkt eine Umtastung des Generatorsignals GS nicht in regelmäßigen, sich wiederholenden Zeitabständen, sondern quasi-zufällig, sodass der Angreifer, der diese Pseudozufallsfolge nicht kennt, den Störsender 4 (Fig. 1) nicht zeitparallel zum Lesegerät 2 umsteuern kann.

Es ergibt sich damit aufgrund der beschriebenen technischen Eigenschaften einer in dem Störsender 4 einsetzbaren PLL oder einer vergleichbaren Regelschaltung nach jedem Umtastvorgang immer ein gewisses Zeitfenster, innerhalb dessen durch das Vergleichsmittel 10 Differenzanteile zwischen Generatorsignal GS und Mischsignal MS nachweisbar sind. Nur ohne fremde Signalquelle erkennt das Vergleichsmittel 10 keinerlei Differenzanteile, da Generatorsignal GS und Lesespulensignal (Mischsignal MS) identisch sind, was einem ungestörten Betrieb des RFID-Systems 1 (Fig. 1) entspricht.

Zusammenfassend wird also die Tatsache, dass der Angreifer dem System Fremdenergie zuführen muss, dazu benutzt, den Manipulationsversuch aufzudecken. Zur sicheren Unterscheidbarkeit von Fremdenergie des Störsenders und Eigenfeldenergie des Lesegeräts kann dabei der Eigenanteil der Feldenergie des Lesegeräts durch eine geeignete Modulation mit einer Signatur versehen werden, wie vorstehend detailliert beschrieben. Dadurch wird das Vorhandensein einer fremden Energiequelle nachweisbar.

Der erfindungsgemäß vorgeschlagene Ansatz zeichnet sich durch besondere Wirtschaftlichkeit aus, da zur Erhöhung der Sicherheit des RFID-Systems nur ein (einmaliger) Aufwand zur Anpassung des Lesegeräts, gegebenenfalls ein entsprechendes Zusatzgerät, notwendig ist. Auf Seiten der massenhaft und in großen Stückzahlen produzierten Transponder entstehen keinerlei zusätzliche Kosten.

## Patentansprüche

1. Verfahren zum Betreiben eines RFID-Systems (1), in dem ein Lesegerät (2) mittels eines Generators (7) wenigstens einen Transponder (3) drahtlos mit elektromagnetischer Energie versorgt und in dem der Transponder (3) Daten an das Lesegerät (2) überträgt, insbesondere durch Modulation seiner Lasteigenschaften, **dadurch gekennzeichnet, dass** zum Erkennen von Manipulationen ein durch den Generator (7) zur Erregung des Transponders (3) erzeugtes Generatorsignal (GS) und ein durch eine Lesespule (L) des Lesegeräts (2) empfangenes Lesespulensignal (MS) durch ein Vergleichsmittel (10) verglichen werden.

2. Verfahren nach Anspruch 1, **dadurch gekennzeichnet, dass** bei einem Vorhandensein von Differenzanteilen wenigstens einer vorgegebenen Stärke zwischen Generatorsignal (GS) und Lesespulensignal (MS) ein Anzeigesignal (AS) zum Anzeigen einer Manipulation ausgegeben wird.

3. Verfahren nach Anspruch 1 oder 2, **dadurch gekennzeichnet, dass** das Lesegerät (2) eine Frequenz des Generatorsignals (GS) umtastet.

4. Verfahren nach einem der Ansprüche 1 bis 3, **dadurch gekennzeichnet, dass** das Lesegerät (2) eine Phasenlage des Generatorsignals (GS) umtastet.

5. Verfahren nach Anspruch 3 oder 4, **dadurch gekennzeichnet, dass** das Umtasten der Frequenz und/oder Phasenlage nach einem vorgegebenen Muster erfolgt.

6. Verfahren nach Anspruch 5, **dadurch gekennzeichnet, dass** es sich bei dem vorgegebenen Muster um einen Pseudozufallscode handelt.

7. Verfahren nach einem der Ansprüche 1 bis 6, **dadurch gekennzeichnet, dass** der Vergleich von Generatorsignal (GS) und Lesespulensignal (MS) während eines Zeitintervalls ausgewertet wird, insbesondere nach einem erfolgten Umtasten, das kürzer ist als eine vorgegebene Auswertezeit.

8. Lesegerät (2) für ein RFID-System (1), aufweisend einen Schwingkreis (5) mit einer Sende-/Lesespule (L) zum Senden und Empfangen elektromagnetischer Signale und einen mit dem Schwingkreis (5) gekoppelten Generator (7) zum Erregen des Schwingkreises (5) mit einem Generatorsignal (GS), **gekennzeichnet durch** ein mit der Lesespule (L) und mit dem Generator (7) gekoppeltes Vergleichsmittel (10), das zum Vergleichen des Generatorsignals (GS) und eines **durch** die Lesespule empfangenen Lesespulensignals (MS) ausgebildet ist.

9. Lesegerät nach Anspruch 8, **dadurch gekennzeichnet, dass** Mittel vorhanden sind zum Ausgeben eines Anzeigesignals (AS) zum Anzeigen einer Manipulation, wenn zwischen Generatorsignal (GS) und Lesespulensignal (MS) Differenzanteile wenigstens einer vorgegebenen Stärke vorhanden sind.

10. Lesegerät (2) nach Anspruch 8 oder 9, **gekennzeichnet durch** ein Umtastmittel (8) zum Umtasten einer Frequenz des Generatorsignals (GS).

11. Lesegerät (2) nach einem der Ansprüche 8 bis 10, **gekennzeichnet durch** ein Umtastmittel (8) zum Umtasten einer Phase des Generatorsignals (GS).

12. Lesegerät (2) nach Anspruch 10 oder 11, **dadurch gekennzeichnet, dass** das Umtastmittel (8) zum wiederholten Umtasten des Generatorsignals (GS) ausgebildet ist.

13. Lesegerät (2) nach einem der Ansprüche 10 bis 12, **dadurch gekennzeichnet, dass** das Umtastmittel (8) zum Umtasten des Generatorsignals (GS) nach einem vorgegebenen Muster ausgebildet ist.

14. Lesegerät (2) nach einem der Ansprüche 10 bis 13, **dadurch gekennzeichnet, dass** das Umtastmittel (8) zum Umtasten des Generatorsignals (GS) nach einem Pseudozufallsmuster ausgebildet ist.

15. RFID-System (1) mit wenigstens einem Lesegerät (2) und einer Anzahl von Transpondern (3), die durch das Lesegerät (2) mit elektromagnetischer Energie versorgt und zur Übertragung von Daten, insbesondere durch Lastmodulation, an das Lesegerät (2) ausgebildet sind, **dadurch gekennzeichnet, dass** das wenigstens eine Lesegerät (2) nach einem der Ansprüche 7 bis 12 ausgebildet ist.
